# EUROPÄISCHE PATENTANMELDUNG

(11) **EP 3 865 229 A1**
(43) Veröffentlichungstag der Anmeldung: **18.08.2021**
(21) Anmeldenummer: 20156519.9
(22) Anmeldetag: 11.02.2020
(51) Int. Cl.: B22F 3/02, B22F 3/03, B22F 3/105, B28B 1/00, B28B 3/02, B29C 64/153, B29C 64/205, B29C 64/255, B33Y 10/00, B33Y 30/00, B33Y 40/10

(54) **FERTIGUNGSSYSTEM ZUM SCHICHTWEISEN AUFBRINGEN EINES PULVERMATERIALS AUF EINE BAUPLATTFORM**

(71) Anmelder: Heraeus Additive Manufacturing GmbH, 63450 Hanau (DE)
(72) Erfinder: NEUMANN, Felix, 63450 Hanau (DE)
(74) Vertreter: Maiwald Patent- und Rechtsanwaltsgesellschaft mbH

(57) **Zusammenfassung**

Die vorliegende Erfindung betrifft ein Fertigungssystem zum schichtweisen Aufbringen eines Pulvermaterials auf eine Bauplattform und ein additives Fertigungsverfahren zur schichtweisen Herstellung eines Objekts auf einer Bauplattform und eine Verwendung des Systems oder Verfahrens zum schichtweisen Aufbringen eines Pulvermaterials auf eine Bauplattform für Pulvermaterial mit einer Pulverfraktion von 20 µm und weniger.

Das Fertigungssystem zum schichtweisen Aufbringen eines Pulvermaterials auf eine Bauplattform umfasst eine Hülse, einen Arm und eine Stempeleinheit. Die Hülse ist zur Aufnahme von Pulvermaterial gestaltet. Die Hülse ist an dem Arm befestigt und der Arm ist beweglich, um die Hülse relativ zu der Bauplattform zu positionieren. Die Stempeleinheit umfasst einen Stempel, der innerhalb der Hülse entlang einer Längsachse der Hülse beweglich ist. Die Stempeleinheit umfasst weiterhin einen Aktuator, der gestaltet ist, um mittels des Stempels das Pulvermaterial innerhalb der Hülse zu verdichten und schichtweise aus der Hülse und auf die Bauplattform zu schieben.

## Beschreibung

### Technisches Gebiet

Die vorliegende Erfindung betrifft ein Fertigungssystem zum schichtweisen Aufbringen eines Pulvermaterials auf eine Bauplattform, ein additives Fertigungsverfahren zur schichtweisen Herstellung eines Objekts auf einer Bauplattform und eine Verwendung des Systems oder Verfahrens zum schichtweisen Aufbringen eines Pulvermaterials auf eine Bauplattform.

### Hintergrund der Erfindung

Additive Fertigung ist ein breit gefasster Sammelbegriff, der eine Vielzahl verschiedener Fertigungstechniken umfasst. Ihnen allen ist gemein, dass sie durch schichtweises Verfestigen von Material, die Herstellung von nahezu beliebig komplexen Werkstücken ermöglichen. Eine spezielle Form der additiven Fertigung ist das selektive Laserschmelzen (SLM). Bei diesem pulverbettbasierten Verfahren schmilzt ein durch Spiegel abgelenkter Laserstrahl gezielt metallische Pulver auf, um schichtweise ein Bauteil zu erzeugen. Dieses u.a. in der Luft- und Raumfahrt sowie in der Medizintechnik weit verbreitete Fertigungsverfahren hat mit einer typischen Auflösung von 50 µm Grenzen bei der Herstellung kleinster Werkstücke.

Eine Weiterentwicklung des SLM Verfahrens stellt das für die Herstellung kleinster Werkstücke optimierte selektive-mikro-Laserschmelzen (µSLM) dar. So ist es möglich, Bauteile mit druckbaren Details von <30 µm bei einer Schichtstärke von < 10 µm herzustellen. Dies eröffnet den Markt für die additive Fertigung in Bereichen, die vorher undenkbar waren. Produkte und Komponenten, wie Mikroaktuatoren, Sensoren, Implantate oder Instrumente für die minimalinvasive Chirurgie können so von der Geometriefreiheit der additiven Fertigung profitieren.

Trotz des Potentials und den wirtschaftlich interessanten Anwendungsfällen, hat sich µSLM bisher kaum in der Industrie etablieren können. Dies liegt zum größten Teil an den Fließeigenschaften von metallischen Pulvern bei Korngrößen von unter 30 µm. Konventionelle Beschichtungssysteme können solch kohäsive Pulver nicht zuverlässig auftragen, wodurch ein wirtschaftlicher Einsatz bisher ausgeschlossen war.

### Zusammenfassung der Erfindung

Es ist daher eine Aufgabe der vorliegenden Erfindung, ein Fertigungssystem zum schichtweisen Aufbringen eines Pulvermaterials auf eine Bauplattform bereitzustellen, welches insbesondere eine wirtschaftliche Verarbeitung von feinen Pulvern ermöglicht.

Diese Aufgabe wird durch ein Fertigungssystem zum schichtweisen Aufbringen eines Pulvermaterials auf eine Bauplattform und ein additives Fertigungsverfahren zur schichtweisen Herstellung eines Objekts auf einer Bauplattform und eine Verwendung des Systems oder Verfahrens zum schichtweisen Aufbringen eines Pulvermaterials auf eine Bauplattform nach den unabhängigen Ansprüchen gelöst. Vorteilhafte Ausführungsformen und Weiterbildungen sind den Unteransprüchen und der nachfolgenden Beschreibung zu entnehmen.

Die vorliegende Erfindung umfasst ein Fertigungssystem zum schichtweisen Aufbringen eines Pulvermaterials auf eine Bauplattform. Das Fertigungssystem umfasst eine Hülse, einen Arm und eine Stempeleinheit.

Die Hülse ist zur Aufnahme von Pulvermaterial gestaltet. Die Hülse ist an dem Arm befestigt und der Arm ist beweglich, um die Hülse relativ zu der Bauplattform zu positionieren.

Die Stempeleinheit umfasst einen Stempel, der innerhalb der Hülse entlang einer Längsachse der Hülse beweglich ist. Die Stempeleinheit umfasst weiterhin einen Aktuator, der gestaltet ist, um mittels des Stempels das Pulvermaterial innerhalb der Hülse zu verdichten und schichtweise aus der Hülse und auf die Bauplattform zu schieben.

Das Fertigungssystem gemäß der vorliegenden Erfindung ermöglicht ein Schichtauftrag von feinen Pulvern für die additive Fertigung und insbesondere für SLM Verfahren. Das vorliegende Fertigungssystem ermöglicht insbesondere eine wirtschaftlich interessante Verarbeitung von feinen Pulvern. Unter feinen Pulvern können Pulverfraktionen von 30 µm und kleiner, vorzugsweise 20 µm und kleiner, weiter bevorzugt 10 µm und kleiner verstanden werden. Konventionelle Fertigungssysteme für grobe und mittlere Pulverfraktionen scheitern im Gegensatz zu der vorliegenden Erfindung an der stark eingeschränkten Fließfähigkeit und/oder der geringen Schüttdichte der feinen Pulverfraktionen.

Die wirtschaftlich interessante Verarbeitung von feinen Pulvern wird mit dem vorliegenden Fertigungssystem unter anderem dadurch erreicht, dass die Stempeleinheit die geringe Fließfähigkeit und/oder die geringe Schüttgutdichte der feinen Pulverfraktionen kompensiert. Insbesondere die Verdichtung des Pulvermaterials durch den Stempel innerhalb der Hülse ermöglicht, dass Pulverkonglomerate zerstört werden, Hohlräume geschlossen werden, die Dichte zunimmt und/oder die Anzahl von Kontaktflächen und Bindungskräften zwischen den Pulverpartikeln zunimmt. Weiterhin lässt sich durch den Stempel und den Aktuator eine definierte und relativ starke Kraft präzise und schnell aufbringen.

Weiterhin wird ein einfaches, staubfreies und sauberes Pulver Handling durch die schnell austauschbare Hülse im Sinne von auswechselbaren Pulverpatronen ermöglicht. Auch eine externe Verdichtung und Trocknung des Pulvers ist möglich, was das Fertigungsverfahren und die Qualität des Fertigungsproduktes weiter verbessert.

Der Aktuator kann eine Druckkraft erzeugen, die entlang des Arms zu dem Stempel innerhalb der Hülse geleitet wird und den Stempel vertikal durch die Hülse in Richtung der Bauplattform drückt. Der Arm kann sich oberhalb der Bauplatte befinden. Der Aktuator kann an einem festen Ende des Arms befestigt sein. Der Arm kann an seinem freien Ende die Hülse halten, vorzugsweise durch eine formschlüssige Verbindung. Der Arm kann zwischen seinem festen Ende und seinem freien Ende in horizontaler Richtung verlaufen, sowohl gerade, als auch gebogen. Der Arm kann um sein festes Ende als Drehachse schwenkbar sein. Damit kann sich die Hülse radial um das feste Ende des Arms bewegen.

In einer Ausführungsform umfasst das Fertigungssystem weiterhin eine Ringrakel, die zwischen der Hülse und der Bauplattform angeordnet ist. In einer Ausführungsform entspricht ein Innendurchmesser der Hülse einem Außendurchmesser der Bauplattform.

In einer Ausführungsform ist der Aktuator ein pneumatischer Aktuator. Der Aktuator kann die Druckkraft auch durch eine Gewichtskraft, eine Federkraft, Hydraulik oder ähnliches erzeugen.

In einer Ausführungsform ist die Hülse zylinderförmig mit einem ersten Ende, welches der Bauplattform zugewandt und offen ist, und einem zweiten Ende, welches dem ersten Ende entgegengesetzt ist und durch den Stempel verschließbar ist. In anderen Worten, die Hülse kann von oben mit dem beweglichen Stempel verschlossen werden. Der Stempel kann in der Hülse in vertikaler Richtung beweglich sein.

In einer Ausführungsform ist der Arm beweglich, um die Hülse in einer Ebene der Bauplattform in einer ersten Richtung und einer zweiten Richtung zu positionieren. Auf diese Weise kann die Hülse, die an dem Arm befestigt ist, zum Beschichten genau über der Bauplattform positioniert werden. Die erste Richtung ist senkrecht zur zweiten Richtung, wobei beide Richtungen in der Ebene der Bauplattform liegen. Vorzugsweise ist der Arm mit der Hülse nur in der Ebene der Bauplattform beweglich, in anderen Worten nur horizontal beweglich. Es ist aber auch möglich, dass der Arm demontiert ohne die Hülse in einer dritten Richtung senkrecht zur Ebene der Bauplattform beweglich ist, in anderen Worten auch vertikal beweglich ist.

In einer Ausführungsform ist die Hülse vom Arm lösbar. In anderen Worten, die Hülse kann leicht von dem Arm entfernt werden. Auf diese Weise kann die Hülse separat vom Arm vorbereitet, mit Pulver gefüllt und/oder gereinigt werden. Eine solche externe Vorbereitung kann ein Befüllen der Hülse mit dem Pulver, ein Verdichten des Pulvers in der Hülse und/oder ein Trocknen des Pulvers in der Hülse umfassen. Auch ist der Einsatz von unterschiedlichen Hülsen und insbesondere der Einsatz von Hülsen mit unterschiedlichen Füllungen möglich. Für einen sicheren Transport und Lagerung kann die Hülse Dichtungselemente aufweisen, um luftdicht verschließbar sein.

Die vorliegende Erfindung umfasst weiterhin ein additives Fertigungsverfahren zur schichtweisen Herstellung eines Objekts auf einer Bauplattform. Das additive Fertigungsverfahren umfasst die folgenden Schritte, nicht notwendigerweise in dieser Reihenfolge:
- Bereitstellen eines Fertigungssystems wie oben beschrieben, wobei eine Hülse des Fertigungssystems ein Pulvermaterial umfasst,
- Positionieren der Hülse relativ zu der Bauplattform, und
- Verdichten des Pulvermaterials in der Hülse und schichtweises Schieben des Pulvermaterials aus der Hülse und auf die Bauplattform mittels eines Stempels des Fertigungssystems, der innerhalb der Hülse entlang einer Längsachse der Hülse von einem Aktuator des Fertigungssystems bewegt wird.

In anderen Worten, ein Arm des Fertigungssystems positioniert die Hülse über der Bauplattform. Der Stempel übt vorzugsweise von oben eine Kraft auf das Pulver aus. Das Pulver wird dabei innerhalb der Hülse verdichtet und schichtweise aus der Hülse und auf die Bauplattform geschoben. Die Bauplattform kann sich beim schichtweisen Aufbringen des Pulvers aus der Hülse und auf die Bauplattform jeweils um eine Schichtdicke unterhalb der Hülse befinden. Nach dem Aufbringen des Pulvers kann der Arm die Hülse von der Bauplattform wegschwenken und der Stempel kann entlastet werden. Weiterhin kann das frisch aufgebrachte Pulver auf der Bauplattform belichtet werden.

Unter "Schichtdicke" kann die Höhe der gerade aufgebrachten Pulverschicht verstanden werden. Um den Vorgang zu wiederholen, kann die Bauplattform um eine Schichtdicke abgesenkt werden. Dies kann vor oder nach der Positionierung der Hülse über der Bauplattform geschehen.

Zusätzlich kann zur weiteren Verdichtung des Pulvers die Bauplatte erst um n Schichtdicken abgesenkt und dann wieder um n-1 Schichtdicken angehoben werden.

In einer Ausführungsform umfasst das additive Fertigungsverfahren weiterhin ein Entfernen von überschüssigem Material von der Bauplatte mittels einer Ringrakel.

In einer Ausführungsform umfasst das additive Fertigungsverfahren weiterhin ein Belichten des Pulvermaterials auf der Bauplattform mittels eines Lasers. In anderen Worten, die frisch aufgebrachte Pulverschicht kann belichtet werden.

Die vorliegende Erfindung umfasst weiterhin eine Verwendung des oben beschriebenen Systems oder Verfahrens zum schichtweisen Aufbringen eines Pulvermaterials auf eine Bauplattform. Diese Verwendung ist besonders geeignet für Pulvermaterial mit einer Pulverfraktion von 30 µm und weniger, bevorzugt 20 µm und weniger, und weiter bevorzugt 10 µm und weniger. Das additive Fertigungsverfahren gemäß der vorliegenden Erfindung wird vorzugsweise zur Herstellung von medizinischen Komponenten eingesetzt.

Weitere Merkmale, Vorteile und Anwendungsmöglichkeiten der vorliegenden Erfindung ergeben sich aus der nachfolgenden Beschreibung, den Ausführungsbeispielen und den

Figuren. Alle beschriebenen und/oder bildlich dargestellten Merkmale können unabhängig von ihrer Darstellung in einzelnen Ansprüchen, Figuren, Sätzen oder Absätzen miteinander kombiniert werden. In den Figuren stehen gleiche Bezugszeichen für gleiche oder ähnliche Obj ekte.

### Kurze Beschreibung der Figuren

- Figur 1: zeigt ein Fertigungssystem zum schichtweisen Aufbringen eines Pulvermaterials auf eine Bauplattform gemäß einer Ausführungsform.
- Figur 2: zeigt eine weitere Ansicht des Fertigungssystems zum schichtweisen Aufbringen eines Pulvermaterials auf eine Bauplattform.

### Detaillierte Beschreibung der Ausführungsbeispiele

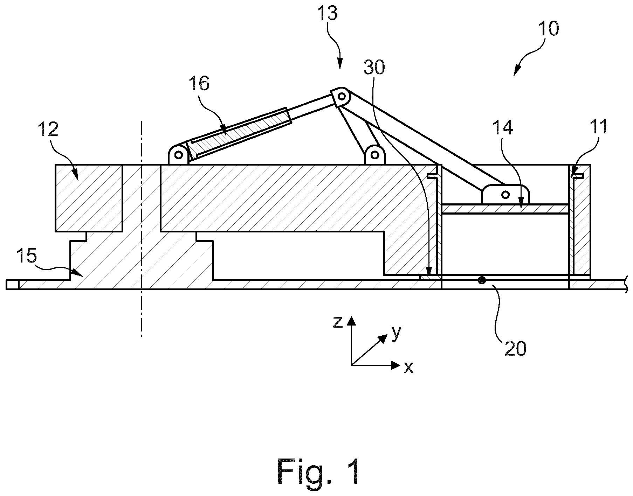

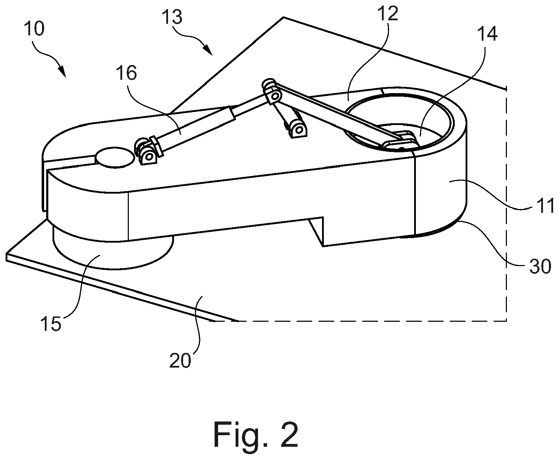

Figur 1 zeigt eine Querschnittsansicht eines Fertigungssystems 10 zum schichtweisen Aufbringen eines Pulvermaterials auf eine Bauplattform 20 gemäß der vorliegenden Erfindung. Figur 2 zeigt eine 3D Ansicht des Fertigungssystems aus der Figur 1.

Das Fertigungssystem 10 umfasst eine Hülse 11, einen Arm 12 und eine Stempeleinheit 13.

Die Hülse 11 kann Pulvermaterial enthalten. Die Hülse 11 ist zylinderförmig mit einem ersten Ende, welches der Bauplattform 20 zugewandt und offen ist, und einem zweiten Ende, welches dem ersten Ende entgegengesetzt ist und durch einen Stempel 14 verschließbar ist. In anderen Worten, die Hülse 11 kann von oben mit dem beweglichen Stempel 14 verschlossen werden. Der Stempel 14 ist in der Hülse 11 in vertikaler Richtung beweglich.

Die Hülse 11 ist an einem freien Ende des Arms 12 lösbar befestigt. Der Arm 12 befindet sich oberhalb der Bauplatte 20. Der Arm 12 ist mittels eines Antriebs 15 beweglich, um die Hülse 11 relativ zu der Bauplattform 20 zu positionieren. Der Arm 12 ist dabei um sein festes Ende als Drehachse schwenkbar, um die Hülse 11 radial um das feste Ende des Arms 12 zu bewegen. Der Arm 12 ist beweglich, um die Hülse 11 in einer Ebene der Bauplattform 20 in einer ersten Richtung X und einer zweiten Richtung Y zu positionieren. Auf diese Weise kann die Hülse 11, die an dem Arm 12 befestigt ist, zum Beschichten genau über der Bauplattform 20 positioniert werden. Die erste Richtung X ist senkrecht zur zweiten Richtung Y, wobei beide Richtungen in der Ebene der Bauplattform 20 liegen. Vorzugsweise ist der Arm 12 mit der Hülse 11 nur in der Ebene X, Y der Bauplattform 20 beweglich, in anderen Worten nur horizontal beweglich. Es ist aber auch möglich, dass der Arm 12 demontiert ohne die Hülse 11 in einer dritten Richtung Z senkrecht zur Ebene der Bauplattform 20 beweglich ist, in anderen Worten auch vertikal beweglich ist.

Die Stempeleinheit 13 umfasst den Stempel 14, der innerhalb der Hülse 11 entlang einer Längsachse der Hülse 11 beweglich ist. Die Stempeleinheit 13 umfasst weiterhin einen pneumatischen Aktuator 16 oder Zylinder, der mittels des Stempels 14 das Pulvermaterial innerhalb der Hülse 11 verdichtet und schichtweise aus der Hülse 11 und auf die Bauplattform 20 schiebt. In anderen Worten, der pneumatische Aktuator 16 kann eine Druckkraft erzeugen, die entlang des Arms 12 über ein Tragwerk oder Gestänge zu dem Stempel 14 innerhalb der Hülse 11 geleitet wird und den Stempel 14 vertikal durch die Hülse 11 in Richtung der Bauplattform 20 drückt.

Das Fertigungssystem umfasst weiterhin eine Ringrakel 30, die zwischen der Hülse 11 und der Bauplattform 20 angeordnet ist. Der Innendurchmesser der Hülse 11 entspricht dem Außendurchmesser der Bauplattform 20.

Bei einem additiven Fertigungsverfahren zur schichtweisen Herstellung eines Objekts auf einer Bauplattform 20 wird das oben beschriebene Fertigungssystem 10 über der Bauplattform 20 positioniert, sodass sich die Hülse 11 oberhalb der Bauplattform 20 befindet. Innerhalb der Hülse 11 wird das Pulvermaterial verdichtet und schichtweise aus der Hülse 11 und auf die Bauplattform 20 geschoben. Dies geschieht mithilfe des Stempels 14, der sich durch die Hülse 11 bewegt. Der Stempel 14 ist an dem Arm 12 angebracht und wird durch den pneumatischen Aktuator 16 angetrieben, dessen Kraft entlang des Arms 12 übertragen wird. Nach dem Aufbringen der Pulverschicht auf die Bauplatte 20 wird der Arm 12 mitsamt der Hülse 11 von der Bauplattform 20 weggeschwenkt. Der Stempel 14 kann entlastet werden. Überschüssiges Pulver kann mithilfe der Ringrakel 30 von der Bauplatte 20 entfernt werden. Die Pulverschicht auf der Bauplatte 20 kann mithilfe eines Lasers belichtet werden.

Das vorliegende Fertigungssystem und Fertigungsverfahren kann besonders zum schichtweisen Aufbringen von Pulvermaterial mit einer Pulverfraktion von 30 µm und weniger verwendet werden.

Ergänzend sei darauf hingewiesen, dass "umfassend" und "aufweisend" keine anderen Elemente oder Schritte ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ein Fertigungssystem (10) zum schichtweisen Aufbringen eines Pulvermaterials auf eine Bauplattform (20), umfassend:
- eine Hülse (11),
- einen Arm (12), und
- eine Stempeleinheit (13),
wobei die Hülse (11) zur Aufnahme von Pulvermaterial gestaltet ist,
wobei die Hülse (11) an dem Arm (12) befestigt ist,
wobei der Arm (12) beweglich ist, um die Hülse (11) relativ zu der Bauplattform (20) zu positionieren,
wobei die Stempeleinheit (13) einen Stempel (14) umfasst, der innerhalb der Hülse (11) entlang einer Längsachse der Hülse (11) beweglich ist, und
wobei die Stempeleinheit (13) einen Aktuator (16) umfasst, der gestaltet ist, um mittels des Stempels (14) das Pulvermaterial innerhalb der Hülse (11) zu verdichten und schichtweise aus der Hülse (11) und auf die Bauplattform (20) zu schieben.

2. Fertigungssystem (10) nach Anspruch 1, weiterhin umfassend eine Ringrakel (30), die zwischen der Hülse (11) und der Bauplattform (20) angeordnet ist.

3. Fertigungssystem (10) nach einem der vorherigen Ansprüche, wobei der Aktuator (16) ein pneumatischer Aktuator ist.

4. Fertigungssystem (10) nach einem der vorherigen Ansprüche, wobei der Arm (12) beweglich ist, um die Hülse (11) in einer Ebene der Bauplattform (20) in einer ersten Richtung (X) und einer zweiten Richtung (Y) zu positionieren.

5. Fertigungssystem (10) nach einem der vorherigen Ansprüche, wobei die Hülse (11) vom Arm (12) lösbar ist.

6. Fertigungssystem (10) nach einem der vorherigen Ansprüche, wobei ein Innendurchmesser der Hülse (11) einem Außendurchmesser der Bauplattform (20) entspricht.

7. Fertigungssystem (10) nach einem der vorherigen Ansprüche, wobei die Hülse (11) zylinderförmig ist mit einem ersten Ende, welches der Bauplattform (20) zugewandt und offen ist, und einem zweiten Ende, welches dem ersten Ende entgegengesetzt ist und durch den Stempel (14) verschließbar ist.

8. Ein additives Fertigungsverfahren zur schichtweisen Herstellung eines Objekts auf einer Bauplattform (20), umfassend die folgenden Schritte:
- Bereitstellen eines Fertigungssystems (10) nach einem der vorherigen Ansprüche, wobei eine Hülse (11) des Fertigungssystems (10) ein Pulvermaterial umfasst,
- Positionieren der Hülse (11) relativ zu der Bauplattform (20), und
- Verdichten des Pulvermaterials in der Hülse (11) und schichtweises Schieben des Pulvermaterials aus der Hülse (11) und auf die Bauplattform (20) mittels eines Stempels (14) des Fertigungssystems (10), der innerhalb der Hülse (11) entlang einer Längsachse der Hülse (11) von einem Aktuator (16) des Fertigungssystems (10) bewegt wird.

9. Fertigungsverfahren nach dem vorherigen Anspruch, weiterhin umfassend ein Absenken der Bauplatte um eine Schichtdicke.

10. Fertigungsverfahren nach einem der vorherigen Ansprüche, weiterhin umfassend ein Absenken der Bauplatte um n Schichtdicken und ein Anheben um n-1 Schichtdicken.

11. Fertigungsverfahren nach einem der vorherigen Ansprüche, weiterhin umfassend ein Entfernen von überschüssigem Material von der Bauplatte (20) mittels einer Ringrakel (30).

12. Fertigungsverfahren nach einem der vorherigen Ansprüche, weiterhin umfassend ein Belichten des Pulvermaterials auf der Bauplattform (20) mittels eines Lasers.

13. Eine Verwendung des Fertigungssystems (10) oder Fertigungsverfahrens zum schichtweisen Aufbringen eines Pulvermaterials auf eine Bauplattform (20) nach einem der vorherigen Ansprüche für Pulvermaterial mit einer Pulverfraktion von 20 µm und weniger.
